# EUROPÄISCHE PATENTSCHRIFT

(11) **EP 4 183 304 B1**
(45) Veröffentlichungstag und Bekanntmachung des Hinweises auf die Patenterteilung: **22.05.2024**
(21) Anmeldenummer: 21209897.4
(22) Anmeldetag: 23.11.2021
(51) Int. Cl.: A47L 11/40, A47L 9/24, F16J 3/04, F16J 15/02, F16J 15/52

(54) **ABSAUGSCHNITTSTELLE ZUR LUFTDICHTEN VERBINDUNG EINES ERSTEN STRÖMUNGSKANALS MIT EINEM ZWEITEN STRÖMUNGSKANAL, BASISSTATION MIT EINER ABSAUGSCHNITTSTELLE UND SYSTEM AUS EINEM SAUGREINIGUNGSGERÄT UND EINER BASISSTATION**
EXTRACTION INTERFACE FOR AIRTIGHT CONNECTION OF A FIRST FLOW CHANNEL TO A SECOND FLOW CHANNEL, BASE STATION HAVING AN EXTRACTION INTERFACE AND SYSTEM COMPRISING A SUCTION CLEANER AND A BASE STATION
INTERFACE D'ASPIRATION DESTINÉE AU RACCORDEMENT ÉTANCHE À L'AIR D'UN PREMIER CANAL D'ÉCOULEMENT À UN SECOND CANAL D'ÉCOULEMENT, STATION DE BASE POURVUE D'INTERFACE D'ASPIRATION ET SYSTÈME COMPOSÉ D'UN APPAREIL DE NETTOYAGE PAR ASPIRATION ET D'UNE STATION DE BASE

(43) Veröffentlichungstag der Anmeldung: 24.05.2023
(73) Patentinhaber: Vorwerk & Co. Interholding GmbH, 42275 Wuppertal (DE)
(72) Erfinder: Soika, Björn, 44809 Bochum (DE); Schönhoff, Helmut, 42897 Remscheid (DE)
(74) Vertreter: Müller, Enno

(56) Entgegenhaltungen:
- EP-B1- 3 505 036
- US-A1- 2020 022 544
- US-A1- 2020 187 736

## Beschreibung

### Gebiet der Technik

Die Erfindung betrifft zunächst eine Absaugschnittstelle zur luftdichten Verbindung eines ersten Strömungskanals mit einem zweiten Strömungskanal, wobei die Absaugschnittstelle einen Grundkörper mit einer Absaugöffnung aufweist, wobei die Absaugöffnung eine Öffnungsebene und ein die Absaugöffnung in Umfangsrichtung umgebendes Dichtelement aufweist.

Daneben betrifft die Erfindung eine Basisstation zum Aussaugen einer Staubkammer eines Saugreinigungsgerät, wobei die Basisstation ein Basisgehäuse mit einem in dem Basisgehäuse angeordneten Gebläse, einem ersten Strömungskanal und einer Absaugschnittstelle zum strömungsführenden Verbinden des Gebläses mit einem zweiten Strömungskanal des Saugreinigungsgerätes aufweist.

Des Weiteren betrifft die Erfindung ein System aus einem Saugreinigungsgerät und einer Basisstation.

### Stand der Technik

Absaugschnittstellen der vorgenannten Art kommen an einer großen Vielzahl von technischen Geräten zur Anwendung, welche einen Strömungskanal aufweisen, der mit einem Strömungskanal einer anderen Einrichtung verbunden werden soll. Derartige Absaugschnittstellen verfügen über eine Absaugöffnung mit einer Öffnungsebene, durch welche von einem Gebläse angesaugte Luft strömt. Dabei entsteht innerhalb des Strömungskanals ein Unterdruck, welcher eine Luftströmung in Richtung des Gebläses bewirkt.

Nachteilig bei im Stand der Technik bekannten Absaugschnittstellen ist, dass das die Absaugöffnung umgebende Dichtelement aufgrund des in dem Strömungskanal sich ausbildenden Unterdruckes kollabiert und in den Strömungskanal hinein, d. h. in Richtung des Gebläses, gezogen wird, so dass sich das Dichtelement von einem abzudichtenden Kontaktbereich entfernt und seine Dichtwirkung nicht mehr optimal ausführen kann.

Insbesondere, jedoch nicht einschränkend zu verstehen, können derartige Absaugschnittstellen Verwendung bei einer Basisstation finden, welche ein Sauggebläse zum Aussaugen einer Staubkammer eines Saugreinigungsgerätes, beispielsweise eines Staubsaugers, aufweist. In diesem Fall weist die Absaugschnittstelle ein Dichtelement auf, welches zwischen der Basisstation und dem mit der Basisstation verbundenen Saugreinigungsgerät abdichtet.

Bei dem Saugreinigungsgerät kann es sich beispielsweise um ein sich selbsttätig fortbewegendes Saugreinigungsgerät handeln, welches sich selbständig zu der Basisstation bewegen kann und dort an der Absaugschnittstelle andockt. Derartige Basisstationen und Saugreinigungsgeräte dienen insbesondere in Haushalten oder Büroumgebungen zu einer selbsttätigen Bodenbearbeitung, beispielsweise Bodenreinigung und/oder Bodenpflege.

Die Druckschrift EP 3 505 036 B1 offenbart beispielsweise eine Basisstation sowie ein selbsttätig an der Basisstation andockendes Saugreinigungsgerät. Die Basisstation weist eine Plattform mit Ladekontakten zum Aufladen eines Akkumulators des Saugreinigungsgerätes sowie einer Absaugschnittstelle zur Verbindung eines Strömungskanals des Saugreinigungsgerätes mit einem Strömungskanal der Basisstation auf.

### Zusammenfassung der Erfindung

Ausgehend von dem vorgenannten Stand der Technik ist es Aufgabe der Erfindung, eine Absaugschnittstelle derart weiterzubilden, dass die Dichtwirkung zwischen dem Dichtelement der Absaugschnittstelle und dem Strömungskanal verbessert wird, insbesondere derart, dass das Dichtelement bei Beaufschlagung der Absaugschnittstelle mit Unterdruck eine optimale Dichtwirkung beibehält.

Zur Lösung dieser Aufgabe wird vorgeschlagen, dass das Dichtelement als elastischer Faltenbalg ausgebildet ist, welcher in einem orthogonal zu der Öffnungsebene orientierten Querschnitt betrachtet in einem entspannten Zustand des Dichtelementes eine E-Form mit zumindest einer Biegestelle, zwei sich in der Biegestelle treffenden Schenkeln und zwei sich an die Schenkel anschließenden Schenkelendbereichen aufweist, wobei die Schenkelendbereiche in einer von der Absaugöffnung abgewandten Richtung nach radial außen weisen und mit zwei örtlich getrennten Verbindungsstellen des Grundkörpers verbunden sind.

Erfindungsgemäß weist das Dichtelement nun an einer die Absaugöffnung begrenzenden Umfangsfläche eine gebogene, geknickte oder gefaltete Form auf, die bezogen auf einen Querschnitt orthogonal zu der Öffnungsebene eine E-Form aufweist. Unter E-Form sind solche Querschnittsformen, d. h. Profile, des Dichtelementes zu verstehen, welche eine nach radial innen gewandte Biegestelle aufweisen, die eine Einschnürung des Dichtelementes bildet, so dass der Öffnungsdurchmesser der Absaugöffnung in der Ebene der Biegestelle maximal ist. Ausgehend von dieser Biegestelle erstrecken sich zwei Schenkel zu den Stirnseiten der Absaugschnittstelle. An jeden der Schenkel schließt sich des Weiteren ein Schenkelendbereich an, welcher zum Beispiel parallel zu der Öffnungsebene orientiert ist. Ein solcher Schenkelendbereich kann insbesondere parallel zu einer Oberfläche des Grundkörpers der Absaugschnittstelle verlaufen und dort luftabdichtend befestigt sein. Des Weiteren kann ein Schenkelendbereich auch relativ zu der Öffnungsebene geneigt sein, beispielsweise mit einem Winkel von bis zu 45 Grad. Im Sinne einer E-Form wird hier auch die Form eines mathematischen Summenzeichens Σverstanden, welches ebenfalls eine Biegestelle, zwei sich in der Biegestelle treffende Schenkel und zwei sich an die Schenkel anschließende Schenkelendbereiche aufweist. Durch eine derartige E-Form bzw. Summenzeichen-Form verfügt das Dichtelement über eine Querschnittsform, die zumindest auf der die Absaugöffnung begrenzenden Seite einen Faltenbalg bildet, dessen Falten sich in Abhängigkeit von dem Betrag eines Unterdrucks innerhalb der Absaugöffnung strecken oder stauchen können. Dabei ist es auch möglich, dass das Dichtelement nicht nur eine einzige Biegestelle, d. h. zwei Falten aufweist, sondern über mehrere Biegestellen verfügt. Die Biegestelle des Dichtelementes ermöglicht eine Streckung des Dichtelementes in Richtung des mit der Absaugschnittstelle verbundenen Strömungskanals, beispielsweise eines mit der Absaugschnittstelle verbundenen Saugreinigungsgerätes, indem der in der Absaugöffnung ausgebildete Unterdruck die Biegestelle derart verformt, dass sich deren Biegeradius vergrößert und die Höhe des Dichtelementes in Richtung einer Flächennormalen der Öffnungsebene zunimmt. Dadurch wird das Dichtelement vorteilhaft an den mit der Absaugschnittstelle verbundenen zweiten Strömungskanal, zum Beispiel ein damit verbundenes Saugreinigungsgerät gepresst. Es können insbesondere Höhentoleranzen ausgeglichen werden. Da die Einschnürung der Biegestelle durch die konkave Ausbildung zudem von dem Zentrum der Absaugöffnung weg weist, kommt es bei dem Aufstellen des Dichtelementes nicht zu einem Kollabieren des Dichteelementes in die Absaugöffnung bzw. in den verbundenen Strömungskanal.

Das Dichtelement kann bezogen auf seinen Querschnitt, d. h. sein Profil, geschlossen ringförmig ausgebildet sein. Alternativ kann das Profil jedoch auch einseitig, von der Absaugöffnung abgewandt, offen sein. Der Begriff Schenkelendbereich ist in diesem Sinne somit nicht zwingend derart zu verstehen, dass der Schenkelendbereich ein freier Schenkelendbereich ist. Vielmehr kann der Schenkelendbereich auch direkt, d. h. ohne Unterbrechung in einen weiteren Bereich des Dichtelementes übergehen. Beispielsweise können auch beide Schenkelendbereiche des Dichtelementes unmittelbar miteinander verbunden sein oder unter Zwischenanordnung eines weiteren Teilbereiches des Dichtelementes miteinander verbunden sein. Wesentlich im Sinne der Erfindung ist, dass zumindest ein Teilbereich des Dichtelementes, bezogen auf den Querschnitt des Dichtelementes, eine E-Form bzw. Σ-Form aufweist. Von besonderer Bedeutung ist dabei, dass das Dichtelement aus einem elastischen Material hergestellt ist, so dass dieses als elastischer Faltenbalg wirken kann. Dies insbesondere und zumindest in Bezug auf die E-Form (bzw. Summenzeichen-Form), umfassend die Biegestelle, die sich in der Biegestelle treffenden Schenkel und die sich an die Schenkel anschließenden Schenkelendbereiche.

Das Dichtelement, welches insbesondere einteilig hergestellt ist, kann rein funktional in im Wesentlichen drei Teilbereiche aufgeteilt werden, nämlich erstens einen ersten Schenkelendbereich, welcher an dem Grundkörper der Absaugschnittstelle befestigt ist, zweitens eine die Absaugöffnung begrenzende und im Wesentlichen orthogonal zu der Öffnungsebene ausgerichtete Umfangs-Innenfläche, welche die eigentliche umlaufende Balgstruktur des Dichtelementes darstellt und die Biegestelle mit den zwei sich in der Biegestelle treffenden Schenkeln aufweist und drittens einen zweiten Schenkelendbereich, welcher an einem Teilbereich des Grundkörpers der Absaugschnittstelle befestigt ist, der dem ersten Schenkelendbereich abgewandt ist. Der zweite Schenkelendbereich dient in einem Übergangsbereich zu dem benachbarten Schenkel der Umfangs-Innenwandung als Dichtfläche zu einem zweiten Strömungskanal bzw. einem mit der Absaugschnittstelle zu verbindenden Gerät, zum Beispiel Saugreinigungsgerät.

Es wird vorgeschlagen, dass das Dichtelement ausgebildet ist, sich bei einem in der Öffnungsebene ausbildenden Unterdruck im Bereich der Biegestelle zu strecken, so dass sich der Biegeradius der Biegestelle vergrößert. Die Biegestelle der Faltenbalg-Struktur der Umfangs-Innenfläche des Dichtelementes erlaubt aufgrund der elastischen Ausbildung ein Strecken, d. h. eine Verlängerung, des Dichtelementes in eine Richtung orthogonal zu der Öffnungsebene der Absaugöffnung der Absaugschnittstelle. Dadurch wird eine Dichtfläche, die bevorzugt in einem Übergangsbereich zwischen dem oberen Schenkelendbereich und dem benachbarten Schenkel ausgebildet ist, stärker gegen einen kontaktierten Strömungskanal bzw. ein Gerätegehäuse eines externen Gerätes gedrückt. Die Elastizität des Dichtelementes, insbesondere der Biegestelle, und die Länge der sich in der Biegestelle treffenden Schenkel ist so bemessen, dass der zu erwartende Unterdruck innerhalb der Absaugschnittstelle hinreichend ist, um die Streckverformung der Biegestelle zu erzielen. Dies hängt von der konkreten Verwendung der Absaugschnittstelle ab, insbesondere von der Saugleistung eines Gebläses, welches Unterdruck an der Absaugschnittstelle erzeugt.

Bevorzugt weisen die, die Absaugöffnung begrenzenden Außenseiten der sich in der Biegestelle treffenden Schenkel in einem entspannten Zustand des Dichtelementes einen Winkel von 50 Grad bis 65 Grad zu der Öffnungsebene der Absaugöffnung auf. Die Flächen der Umfangs-Innenwandung des Dichtelementes, d. h. der sich in der Biegestelle treffenden Schenkel, sind somit mit einem Winkel von 50 Grad bis 65 Grad zu der Öffnungsebene der Absaugöffnung geneigt. Dies führt dazu, dass die Biegestelle bzw. die angrenzenden Schenkel des Dichtelementes bei Beaufschlagung der Absaugöffnung mit einem Unterdruck nach innen gezogen werden, d. h. in Richtung eines Zentrums der Absaugöffnung. Dadurch richtet sich das Dichtelement auf und drückt in erhöhtem Maße gegen den verbundenen Strömungskanal. Im Ergebnis erhöht sich die Anpresskraft zwischen dem Dichtelement und dem Dichtungspartner. Der sich in der Absaugschnittstelle ausbildende Unterdruck sorgt des Weiteren dafür, dass der gesamte Dichtungsbereich des Dichtelementes tendenziell nach innen, in Richtung eines Zentrums der Öffnungsebene gezogen wird, daher ist bei der Bemessung des Winkels der Biegestelle sowie der Längen der angrenzenden Schenkel und der Materialwahl zu berücksichtigen, dass es bei dem zu erwartenden Unterdruck nicht zu einer Reduzierung des Öffnungsquerschnitts der Öffnungsebene kommt.

Eine weitere Maßnahme in diesem Zusammenhang kann sein, dass die Schenkelendbereiche eine größere Länge aufweisen als der jeweils angrenzende Schenkel. Die kürzeren Schenkel des Dichtelementes sind im Vergleich zu den längeren Schenkelendbereichen mechanisch stabiler und müssen nicht weiter fixiert werden. Demgegenüber werden die längeren Schenkelendbereich jeweils an einer Verbindungsstelle des Grundkörpers der Absaugschnittstelle fixiert, wobei die beiden Verbindungsstellen der Schenkelendbereiche örtlich voneinander getrennt sind. Durch die Fixierung der Schenkelendbereiche sowie die demgegenüber kürzere Ausbildung der Schenkel, wird eine Stabilität der Biegestelle derart erreicht, dass das Dichtelement an seiner die Absaugöffnung begrenzenden Umfangs-Innenfläche nicht nach innen gewölbt wird, d. h. in Richtung des Zentrums der Absaugöffnung, sondern vielmehr weiterhin eine konkave Oberfläche des Dichtelementes ausbildet, welche den Öffnungsquerschnitt der Absaugöffnung nicht verringert.

Des Weiteren wird vorgeschlagen, dass bezogen auf den orthogonal zu der Öffnungsebene orientierten Querschnitt, ein erster Schenkelendbereich des Dichtelementes flächig mit einer Verbindungsstelle des Grundkörpers verbunden ist, und dass ein zweiter Schenkelendbereich des Dichtelementes relativ zu dem Grundkörper beweglich an einer Verbindungsstelle des Grundkörpers fixiert ist, wobei der zweite Schenkelendbereich insbesondere relativ zu der Verbindungsstelle schwenkbar ist. Gemäß dieser Ausgestaltung ist der zweite Schenkelendbereich, welcher die eigentliche Dichtfläche zu dem verbundenen zweiten Strömungskanal bildet, beweglicher mit dem Grundkörper verbunden, als der erste Schenkelendbereich, welcher flächig mit einer Kontaktfläche des Grundkörpers verbunden ist und somit keinen Bewegungsspielraum in diesem Teilbereich des Dichtelementes bietet. Der zweite Schenkelendbereich ist insbesondere schwenkbar an dem Grundkörper angeordnet, nämlich so, dass durch ein Verschwenken dieses zweiten Schenkelendbereiches eine Verformung des Dichtelementes im Bereich des zweiten Schenkelendbereiches, des damit verbundenen zweiten Schenkels und der Biegestelle möglich wird. Bei Beaufschlagung der Absaugöffnung der Absaugschnittstelle wirkt die Verbindungsstelle zwischen dem zweiten Schenkelendbereich und dem Grundkörper der Absaugschnittstelle als Drehpunkt bzw. Drehachse, welche eine Verlagerung des zweiten Schenkelendbereiches hin zu dem zweiten Strömungskanal erlaubt und somit eine Streckung der Biegestelle ermöglicht. Dadurch wird die Dichtfläche des zweiten Schenkelendbereiches weiter gegen den zweiten Strömungskanal gedrückt, wodurch sich die abdichtende Wirkung des Dichtelementes der Absaugschnittstelle verstärkt.

Der erste Schenkelendbereich kann mit der Verbindungsstelle des Grundkörpers verklebt, verschweißt oder verrastet sein, und/oder die Verbindungsstelle des Grundkörpers kann Steckelemente aufweisen, die in korrespondierende Stecköffnungen des ersten Schenkelendbereiches gesteckt sind. Prinzipiell kann das Dichtelement entweder permanent mit dem Grundkörper der Absaugschnittstelle verbunden sein, nämlich so, dass sich das Dichtelement nicht ohne Zerstörung von dem Grundkörper lösen lässt, oder alternativ derart, insbesondere über eine Steckverbindung, dass das Dichtelement gegebenenfalls auch gelöst und ausgewechselt werden kann. Besonders bevorzugt ist dabei eine Ausbildung, bei welcher der Grundkörper der Absaugschnittstelle Steckelemente aufweist, die durch entsprechende Stecköffnungen des Dichtelementes, nämlich dessen ersten Schenkelendbereiches, gesteckt werden können. Der zu dem Grundkörper weisende Schenkelendbereich dient dabei als umlaufender Fixierungsring, welcher das Dichtelement an dem Grundkörper fixiert.

Des Weiteren wird vorgeschlagen, dass das Dichtelement aus einem thermoplastischen Elastomer ausgebildet ist, wobei das Dichtelement insbesondere eine Materialhärte von 30 Shore A bis 60 Shore A aufweist. Wie vorgeschlagen, ist das Dichtelement somit als weiche Kunststoffkomponente ausgebildet, welche eine Verformung der Gestalt des Dichtelementes und insbesondere die zuvor beschriebene Streckung der Biegestelle erlaubt. In der Praxis hat sich ein Dichtelement mit einer Materialhärte von 30 Shore A bis 60 Shore A insbesondere bewährt.

Neben der zuvor beschriebenen Absaugschnittstelle wird mit der Erfindung des Weiteren eine Basisstation zum Aussaugen einer Staubkammer eines Saugreinigungsgerätes vorgeschlagen, wobei die Basisstation ein Basisgehäuse mit einem in dem Basisgehäuse angeordneten Gebläse, einem ersten Strömungskanal und einer Absaugschnittstelle zum strömungsführenden Verbinden des Gebläses mit einem zweiten Strömungskanal des Saugreinigungsgerätes aufweist, und wobei die Absaugschnittstelle nach einer der zuvor beschriebenen Ausführungsformen ausgebildet ist.

Gemäß dieser Ausgestaltung ist die zuvor beschriebene Absaugschnittstelle Teil einer Basisstation, welche zur Verbindung mit einem externen Saugreinigungsgerät dient. Die Basisstation weist ein Gebläse auf, welches dem Aussaugen einer Staubkammer des Saugreinigungsgerätes dient. Zu diesem Zweck werden ein erster Strömungskanal der Basisstation und ein zweiter Strömungskanal des Saugreinigungsgerätes über die Absaugschnittstelle miteinander verbunden. Die Absaugschnittstelle kann dabei ein integraler Bestandteil des Basisgehäuses der Basisstation sein, so dass das Basisgehäuse der Basisstation gleichzeitig auch den Grundkörper der Absaugschnittstelle zur Verfügung stellt. Alternativ ist es möglich, dass der Grundkörper der Absaugschnittstelle als separates Element mit dem Basisgehäuse der Basisstation verbunden wird, beispielsweise durch Verkleben oder Verschweißen. Wesentlich ist, dass der erste Strömungskanal der Basisstation zu der Absaugschnittstelle geführt ist, nämlich so, dass dieser in die Absaugöffnung der Absaugschnittstelle mündet und dort mit einem zweiten Strömungskanal eines mit der Basisstation verbundenen Saugreinigungsgerätes verbunden werden kann.

Die Basisstation kann neben der Funktion zum Aussaugen einer Staubkammer auch zur Ausführung anderer Servicetätigkeiten ausgebildet sein. Beispielsweise kann die Basisstation ein Ladegerät zum Aufladen eines Akkumulators eines Saugreinigungsgerätes aufweisen. Die Basisstation kann eine bodengestützte Station sein, d. h. auf einer Bodenfläche stehen, oder auch als wandhängende Basisstation ausgebildet sein. Die mit der Basisstation verbindbaren Saugreinigungsgeräte können beispielsweise sich selbsttätig fortbewegende Saugreinigungsroboter sein, oder alternativ auch von einem Nutzer manuell geführte Saugreinigungsgeräte, beispielsweise Handstaubsauber, welche sich nicht selbsttätig zu der Basisstation hin bewegen können.

Insbesondere wird vorgeschlagen, dass die Basisstation eine Basisplatte zur zumindest teilweisen Aufnahme des Saugreinigungsgerätes aufweist, wobei die Absaugschnittstelle der Basisstation, bezogen auf eine Orientierung der Basisstation während eines Saugbetriebs, auf einer nach oben gerichteten Oberseite der Basisplatte angeordnet ist, so dass eine Flächennormale einer Öffnungsebene der Absaugschnittstelle im Wesentlichen vertikal orientiert ist. Die in der Art ausgebildete Basisstation kann insbesondere zur Verbindung mit einem sich selbsttätig fortbewegenden Saugreinigungsgerät dienen, welches zumindest teilweise auf die Basisplatte auffahren kann, nämlich so, dass ein Strömungskanal, welcher zu einer Staubkammer des Saugreinigungsgerätes führt, mit der Absaugschnittstelle der Basisstation verbunden werden kann. Gemäß einer besonderen Ausgestaltung kann die Staubkammer in der Andockposition des Saugreinigungsgerätes an der Basisstation unmittelbar über der Absaugschnittstelle liegen, so dass in der Staubkammer gesammelter Staub und Schmutz unter Schwerkrafteinwirkung in Richtung der Basisstation transportiert werden kann, unterstützt durch den von dem Gebläse der Basisstation erzeugten Unterdruck an der Absaugschnittstelle. Die Basisstation kann insbesondere eine mechanische Führungseinrichtung aufweisen, um das Saugreinigungsgerät beim Andocken an der Basisstation derart zu führen, dass der Strömungskanal des Saugreinigungsgerätes optimal mit der Absaugschnittstelle verbunden werden kann. Dies gilt vorteilhaft sowohl für sich selbsttätig fortbewegende Saugreinigungsgeräte, als auch für Saugreinigungsgeräte, die ein Nutzer manuell mit der Basisstation verbindet.

Neben der zuvor beschriebenen Basisstation wird mit der Erfindung des Weiteren auch ein System aus einem Saugreinigungsgerät und einer derartigen Basisstation vorgeschlagen, wobei die Basisstation den ersten Strömungskanal und die Absaugschnittstelle aufweist, wobei das Saugreinigungsgerät den zweiten Strömungskanal aufweist und wobei die Absaugschnittstelle eingerichtet ist, den ersten Strömungskanal luftdicht mit dem zweiten Strömungskanal zu verbinden, wenn das Saugreinigungsgerät mit der Basisstation verbunden ist, wobei das Dichtelement der Absaugschnittstelle so ausgebildet ist, dass das Dichtelement bei Betrieb des Gebläses der Basisstation aufgrund eines im Bereich der Absaugschnittstelle wirkenden Unterdrucks unter Vergrößerung des Biegeradius der Biegestelle des Dichtelementes in Richtung des Saugreinigungsgerätes gestreckt wird. Das System ist somit derart ausgebildet, dass sich der erste Strömungskanal der Basisstation und der zweite Strömungskanal des Saugreinigungsgerätes an der Absaugschnittstelle treffen, so dass das Gebläse Sauggut aus der Staubkammer des Saugreinigungsgerätes ansaugen kann. Dazu erzeugt das Gebläse einen Unterdruck in den korrespondierenden Strömungskanälen und schließlich der Staubkammer des Saugreinigungsgerätes. Um das Saugreinigungsgerät bzw. dessen zweiten Strömungskanal luftdicht mit der Absaugschnittstelle der Basisstation zu verbinden, ist die Absaugschnittstelle der Basisstation erfindungsgemäß derart ausgestaltet, dass sich das Dichtelement bei Betrieb des Gebläses aufgrund des Unterdrucks unter Vergrößerung des Biegeradius der Biegestelle in Richtung des Saugreinigungsgerätes streckt. Dadurch wird das Dichtelement weiter in Richtung des Saugreinigungsgerätes gedrückt und erhöht dort die Dichtwirkung. Durch die faltenbalgartige Ausbildung des Dichtelementes und vorgeschlagene Fixierung des Dichtelementes an dem Grundkörper der Absaugschnittstelle wird zudem verhindert, dass das Dichtelement bei Beaufschlagung der Absaugöffnung mit Unterdruck kollabiert und sich dadurch der Öffnungsquerschnitt der Saugöffnung der Basisstation verringert, was zu einem Festsetzen von Staub und Schmutz führen könnte. Das Dichtelement bzw. dessen Biegestelle weist im Ruhezustand, d. h. gestauchten Zustand, eine maximale Einschnürung im Bereich der Absaugöffnung auf, so dass bei Beaufschlagung des Öffnungsquerschnittes der Absaugöffnung mit einem Unterdruck eine Streckbewegung des Dichtelementes im Bereich der Biegestelle resultieren kann.

Die zuvor genannten weiteren Ausbildungen und Funktionsweisen der Absaugschnittstelle bzw. der Basisstation gelten entsprechend auch für das erfindungsgemäße System, so dass an dieser Stelle auf eine Wiederholung der diesbezüglichen Beschreibungsteile verzichtet wird.

### Kurze Beschreibung der Zeichnungen

Im Folgenden wird die Erfindung anhand von Ausführungsbeispielen näher erläutert. Es zeigen:
- Fig. 1: ein erfindungsgemäßes System aus einem Saugreinigungsgerät und einer Basisstation,
- Fig. 2: eine schräge Draufsicht auf die Basisstation mit einer Absaugschnittstelle für das Saugreinigungsgerät,
- Fig. 3: ein Dichtelement der Absaugschnittstelle,
- Fig. 4: einen perspektivischen Querschnitt des Dichtelementes,
- Fig. 5: ein die Absaugschnittstelle aufweisender Teilbereich der Basisstation sowie ein damit verbundener Teilbereich des Saugreinigungsgerätes,
- Fig. 6: die Absaugschnittstelle der Basisstation mit damit verbundenem Dichtelement in einer Ansicht von unten.

### Beschreibung der Ausführungsformen

Die Figuren zeigen eine mögliche Ausführungsform eines erfindungsgemäßen Systems sowie einer erfindungsgemäßen Basisstation 20 und eines dazu korrespondierend ausgebildeten Saugreinigungsgerätes 21. Es versteht sich jedoch von selbst, dass die Basisstation 20 und das Saugreinigungsgerät 21 auch abweichend ausgebildet sein können, wobei es wesentlich ist, dass die Basisstation 20 und das Saugreinigungsgerät 21 so korrespondierend zueinander ausgebildet sind, dass das Saugreinigungsgerät 21 optimal an einer Absaugschnittstelle 1 der Basisstation 20 andocken kann.

Das Saugreinigungsgerät 21 ist hier beispielsweise als ein sich selbsttätig fortbewegender Reinigungsroboter, nämlich beispielsweise als Saugroboter, ausgebildet. Alternativ ist es im Rahmen der Erfindung jedoch ebenso möglich, dass es sich bei dem Saugreinigungsgerät 21 um ein manuell von einem Nutzer geführtes Saugreinigungsgerät 21 handelt, welches sich nicht selbsttätig zu der Basisstation 20 hinbewegen kann. Bei einer solchen Ausgestaltung stellt der Nutzer das Saugreinigungsgerät 21 beispielsweise in eine Aufnahme der Basisstation 20 hinein, um das Saugreinigungsgerät 21 mit der Absaugschnittstelle 1 zu verbinden.

Das Saugreinigungsgerät 21 weist beispielsweise ein Reinigungselement 17 auf, hier zum Beispiel eine um eine horizontale Achse rotierende Reinigungswalze, sowie zwei motorisch angetriebene Räder 16. Des Weiteren verfügt das Saugreinigungsgerät 21 gegebenenfalls über Stützrollen, welche hier jedoch nicht weiter beschrieben werden.

Ebenso nicht im Einzelnen dargestellt verfügt das Saugreinigungsgerät 21 über einen Akkumulator, der die benötigte Energie für den Antrieb der Räder 16 sowie auch des rotierenden Reinigungselementes 17 liefert und gegebenenfalls auch für weitere elektronische und elektrische Komponenten des Saugreinigungsgerätes 21 zur Verfügung steht. Das Saugreinigungsgerät 21 hat hier beispielsweise des Weiteren zur Navigation und Selbstlokalisierung innerhalb einer Umgebung eine Steuereinrichtung, die Daten einer Umgebungsdetektionseinrichtung erhält. Die Umgebungsdetektionseinrichtung kann beispielsweise einen Laserabstandssensor aufweisen, der Abstände zu Hindernissen in der Umgebung des Saugreinigungsgerätes 21 misst. Aus den Abständen kann die Steuereinrichtung dann eine Umgebungskarte erstellen, die zur Navigation und Selbstlokalisierung des Saugreinigungsgerätes 21 dient. Neben dem Abstandssensor kann das Saugreinigungsgerät 21 noch weitere Sensoren aufweisen, beispielsweise einen Odometriesensor, der eine Fortbewegung des Saugreinigungsgerätes 21 misst, einen oder mehrere Kontaktsensoren, Ultraschallsensoren oder andere.

Die Basisstation 20 weist ein Basisgehäuse 22 und eine sich ausgehend von dem Basisgehäuse 22 plattenartig auf einer Bodenfläche erstreckende Basisplatte 25 auf. Die Basisplatte 25 stellt eine Oberseite 26 zur Verfügung, auf welche das Saugreinigungsgerät 21 auffahren und in eine angedockte Endstellung an der Basisstation 20 fahren kann. Die Basisplatte 25 ist vorzugsweise angeschrägt, um dem Saugreinigungsgerät 21 ein Fahren auf die Basisplatte 25 zu erleichtern. Das Basisgehäuse 22 der Basisstation 20 verfügt des Weiteren über eine Basisstaubkammer 27, ein Gebläse 24 und einen ersten Strömungskanal 2, welcher ausgehend von der Basisstaubkammer 27 zu der Absaugschnittstelle 1 geführt ist.

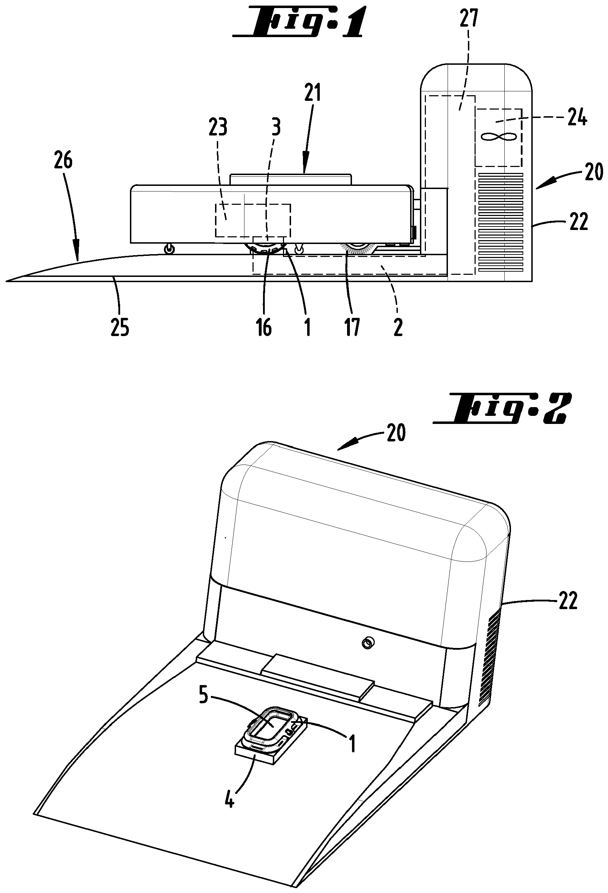

Das Saugreinigungsgerät 21 verfügt ebenfalls über eine Staubkammer 23 zur Aufnahme von Sauggut, d. h. Staub und Schmutz, welches von einer Bodenfläche aufgenommen wurde, und einen zweiten Strömungskanal 3, welcher von der Staubkammer 23 zu einer nicht näher dargestellten Schnittstelle geführt ist, die an die Absaugschnittstelle 1 der Basisstation 20 andocken kann. Wie in der Figur 1 dargestellt, können der erste Strömungskanal 2 der Basisstation 20 und der zweite Strömungskanal 3 des Saugreinigungsgerätes 21 somit über die Absaugschnittstelle 1 miteinander verbunden werden, um unter Zuhilfenahme des Gebläses 24 der Basisstation 20 die Staubkammer 23 des Saugreinigungsgerätes 21 in die Basisstaubkammer 27 der Basisstation 20 zu entleeren.

Figur 2 zeigt die Basisstation 20 in perspektivischer Draufsicht. Erkennbar ist die Oberseite 26 der Basisplatte 25, welche die Absaugschnittstelle 1 aufweist. Die Absaugschnittstelle 1 verfügt über ein Dichtelement 7, welches eine Absaugöffnung 5 der Absaugschnittstelle 1 begrenzt. Das Basisgehäuse 22 und/oder die Basisplatte 25 der Basisstation 20 können weitere Schnittstellen zur Kopplung mit dem Saugreinigungsgerät 21 zur Verfügung stellen, welche hier nicht näher dargestellt sind. Beispielsweise weist das Basisgehäuse 22 oder die Basisplatte 25 vorzugsweise elektrische Kontakte auf, die mit entsprechenden elektrischen Kontakten des Saugreinigungsgerätes 21 verbunden werden können. Des Weiteren können auf der Basisplatte 25 auch Führungsspuren ausgebildet sein, um das Saugreinigungsgerät 21 in eine bestimmte Andockposition an der Basisstation 20 zu lenken.

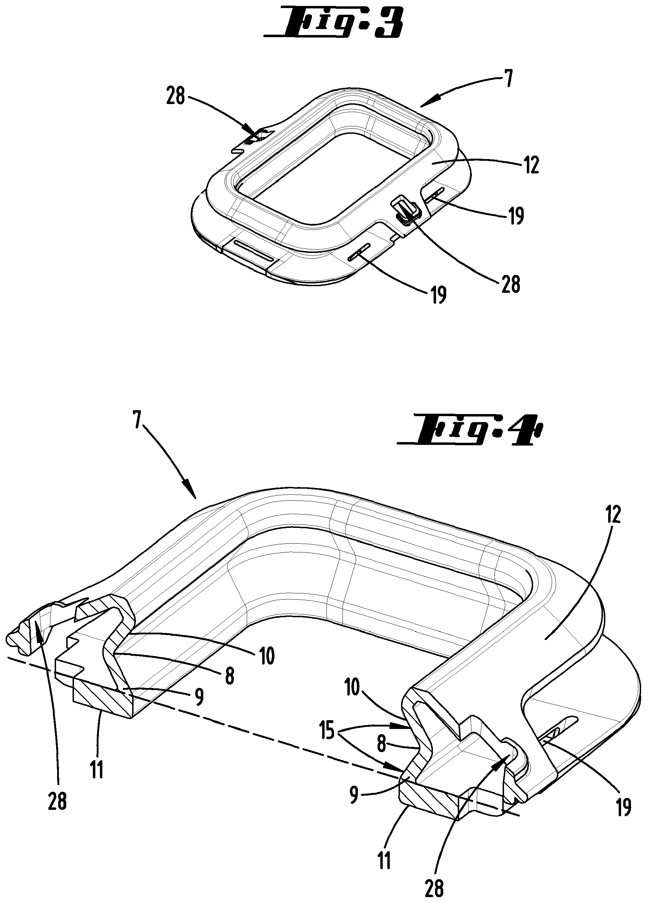

Figur 3 zeigt eine perspektivische Ansicht des Dichtelementes 7. In Figur 4 ist des Weiteren ein Querschnitt des Dichtelementes 7 gezeigt, welcher orthogonal zu einer Öffnungsebene 6 der Absaugöffnung 5 und quer zu der Umfangsrichtung des ringförmig um die Absaugöffnung (5) geführten Dichtelementes 7 verläuft. Bezogen auf den Querschnitt weist das Dichtelement 7 im Wesentlichen eine E-Form oder Summenzeichen-Form (Σ) auf. Diese Form zeichnet sich aus durch zwei in einem Winkel zueinander angeordnete Schenkel 9, 10, die sich in einer gemeinsamen Biegestelle 8 treffen, und durch zwei Schenkelendbereiche 11, 12, von welchen sich ein erster Schenkelendbereich 11 an den ersten Schenkel 9 anschließt und sich ein zweiter Schenkelendbereich 12 an den zweiten Schenkel 10 anschließt. Das Dichtelement 7 ist aus einem thermoplastischen Material hergestellt, welches bevorzugt eine Shore A Härte zwischen 30 und 60 aufweist. Der erste Schenkelendbereich 11 und der zweite Schenkelendbereich 12 dienen zum Verbinden des Dichtelementes 7 mit je einer Verbindungsstelle 13, 14 eines Grundkörpers 4 der Absaugschnittstelle 1, welcher Grundkörper 4 beispielsweise ein integraler Gehäuseteil eines die Absaugschnittstelle 1 aufweisenden Gerätes, hier der Basisstation 20, sein kann.

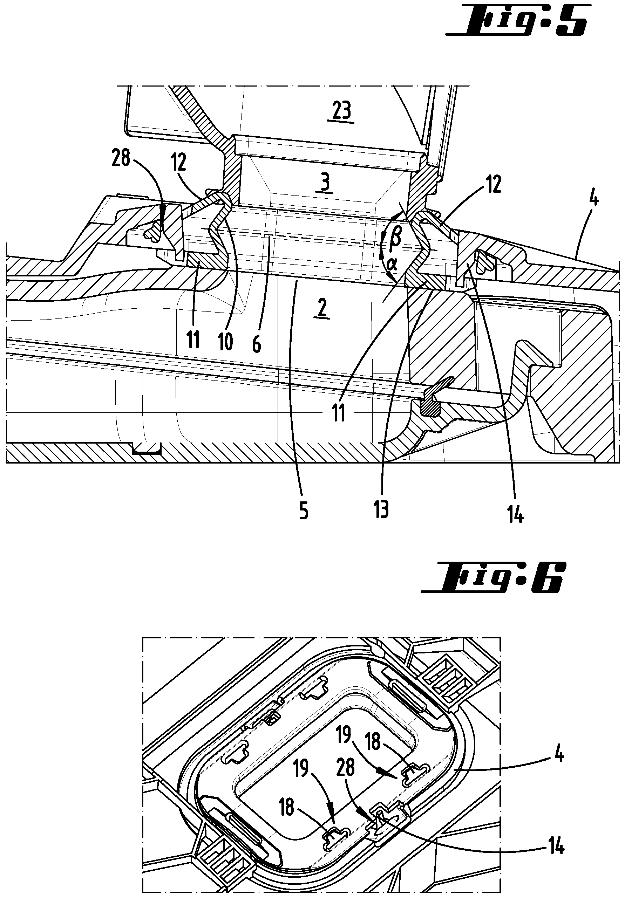

Die Figuren 5 und 6 zeigen eine Einbausituation des Dichtelementes 7 in der Basisplatte 25 der Basisstation 20. Dabei zeigt Figur 5 einen Querschnitt durch die Absaugschnittstelle 1 sowie korrespondierende, miteinander verbundene Teilbereiche von Basisstation 20 und Saugreinigungsgerät 21 (Figur 5) bzw. eine Unteransicht des mit der Basisplatte 25 verbundenen Dichtelementes 7.

Wie in den Figuren 3 bis 6 erkennbar, weist das Dichtelement 7 Stecköffnungen 19 an dem ersten Schenkelendbereich 11 sowie Öffnungen 28 an dem zweiten Schenkelendbereich 12 auf. Die Stecköffnungen 19 des ersten Schenkelendbereiches 11 dienen zur Verbindung mit korrespondierenden Steckelementen 18 des Grundkörpers 4 der Absaugschnittstelle 1, welche wie in Figur 6 dargestellt durch die Stecköffnungen 19 des Dichtelementes 7 hindurchgesteckt werden, um den unteren Schenkelendbereich 11 flächig auf einer korrespondierenden Verbindungsstelle 13 des Grundkörpers 4 zu befestigen. Der umlaufende Schenkelendbereich 11 dient somit als ein Fixierungsring, welcher das Dichtelement 7 insgesamt luftdicht an dem Grundkörper 4 der Absaugschnittstelle 1 fixiert. In Umfangsrichtung kann der Schenkelendbereich 11 eine Mehrzahl derartiger Stecköffnungen 19 aufweisen.

An der gegenüberliegenden Seite der E-Form bzw. Summenzeichen-Form weist das Dichtelement 7 die Öffnungen 28 auf, welche zur Verbindung mit Verbindungsstellen 14 des Grundkörpers 4 der Absaugschnittstelle 1 dienen. Bei dem vorliegenden Ausführungsbeispiel weist der zweite Schenkelendbereich 12 an gegenüberliegenden Umfangsseiten des Dichtelementes 7 jeweils nur eine Öffnung 28 auf, allerdings ist es auch möglich, weitere Öffnungen 28 vorzusehen, die mit entsprechenden Verbindungsstellen 14 des Grundkörpers 4 der Absaugschnittstelle 1 verbunden werden können. Wie in insbesondere Figur 6 und Figur 5 erkennbar, greift eine hakenförmig ausgebildete Verbindungsstelle 14 des Grundkörpers 4 der Absaugschnittstelle 1 durch die Öffnung 28 des zweiten Schenkelendbereiches 12 des Dichtelementes 7 hindurch. Durch die hakenförmige Ausgestaltung der geräteseitigen Verbindungsstelle 14 und die Größe der Öffnung 28 bleibt ein Bewegungsspielraum für den zweiten Schenkelendbereich 12 erhalten, so dass sich dieser relativ zu der Absaugschnittstelle 1 verlagern kann. Auch bei in die Öffnung 28 eingesteckter hakenförmiger Verbindungsstelle 14 verbleibt ein Spielraum in der Öffnung 28, welcher eine relative Bewegung des zweiten Schenkelendbereiches 12 zu der Verbindungsstelle 14 ermöglicht. Eine Kontaktstelle zwischen der Verbindungsstelle 14 und dem Schenkelendbereich 12 dient dabei als Drehachse oder Drehpunkt, um welche bzw. um welchen der Schenkelendbereich 12 rotieren kann.

Die Erfindung funktioniert nun so, dass das Dichtelement 7 bei der Montage der Basisstation 20 zunächst mit Hilfe der Stecköffnungen 19 und der Öffnungen 28 mit korrespondierenden Verbindungsstellen 13, 14 der Absaugschnittstelle 1 der Basisstation 20 verbunden wird. Wie in Figur 6 dargestellt, werden dafür die Verbindungsstellen 14 in die jeweils zugehörigen Öffnungen 28 eingesteckt und die Steckelemente 18 in die korrespondierenden Stecköffnungen 19.

In einem montieren, aber noch entspannten Zustand weist das Dichtelement 7 die in den Figuren 3 und 5 dargestellte Form auf, bei welcher der erste Schenkel 9 (unterer Schenkel) und der zweite Schenkel 10 (oberer Schenkel) jeweils einen Winkel α, β von hier beispielhaft ungefähr 58 Grad zu der Öffnungsebene 6 der Absaugöffnung 5 der Absaugschnittstelle 1 aufweisen. Die Winkel α, β sind in der gezeigten unbelasteten Ausgangsstellung vorzugsweise so bemessen, dass diese zwischen 50 Grad und 65 Grad liegen. Durch die Schrägstellung der Schenkel 9, 10 zu der Öffnungsebene 6 ergibt sich eine Einschnürung im Bereich der Biegestelle 8 des Dichtelementes 7, so dass die Außenseite 15 des als Hohlkörper ausgebildeten Dichtelementes 7 im Bereich der Biegestelle 8 eingeschnürt ist. Durch die gefaltete Form der Außenseite 15 ergibt sich die erfindungsgemäße Funktionsweise der Absaugschnittstelle 1, welche im Folgenden näher erläutert wird.

Um die Staubkammer 23 des Saugreinigungsgerätes 21 an der Basisstation 20 zu entleeren, wird zunächst der zweite Strömungskanal 3 des Saugreinigungsgerätes 21 mit der Absaugschnittstelle 1 der Basisstation 20 verbunden. Im Falle des hier dargestellten sich selbsttätig fortbewegenden Saugreinigungsgerätes 21 bewegt sich dieses selbsttätig zu der Basisstation 20 und koppelt dort derart an, dass der zweite Strömungskanal 3 des Saugreinigungsgerätes 21 ortskorrespondierend an der Absaugschnittstelle 1 der Basisstation 20 zur Anordnung kommt. Ein Endbereich des zweiten Strömungskanals 3 oder auch eine entsprechende Schnittstelle des Saugreinigungsgerätes 21 liegt dann mechanisch an dem Dichtelement 7 der Absaugschnittstelle 1 der Basisstation 20 an. Dies ist insbesondere in Figur 5 dargestellt. Sobald eine Steuerung der Basisstation 20 den Kontakt des Saugreinigungsgerätes 21 mit der Absaugschnittstelle 1 erkennt, wird das Gebläse 24 der Basisstation 20 gestartet. Alternativ ist es auch möglich, dass das Gebläse 24 bereits gestartet wird, bevor überhaupt ein Kontakt an der Absaugschnittstelle 1 detektiert wird. Beispielsweise kann bereits ein Kontakt eines Rades 16 des Saugreinigungsgerätes 21 auf der Basisplatte 25 einen Betrieb des Gebläses 24 auslösen. Durch den Betrieb des Gebläses 24 entsteht in dem ersten Strömungskanal 2 der Basisstation 20 und damit auch innerhalb der Absaugöffnung 5 der Absaugschnittstelle 1 ein Unterdruck, welcher die Außenseite 15 des Dichtelementes 7 nach innen in Richtung eines Zentrums der Öffnungsebene 6 zieht. Dies führt dazu, dass die Außenseite 15 an der Biegestelle 8 gestreckt wird, so dass sich die Winkel α, β vergrößern. Dies wird dadurch ermöglicht, dass die Verbindung zwischen dem zweiten Schenkelendbereich 12 und der Verbindungsstelle 14 eine Rotation des Schenkelendbereiches 12 um eine Achse, die im Wesentlichen parallel zu der Längserstreckung der Biegestelle 8 (welche in Umfangsrichtung des Dichtelementes 7 verläuft) orientiert ist, erlaubt. Dadurch kann der Biegeradius der Biegestelle 8 vergrößert werden, was insgesamt zu einer Streckung des Dichtelementes 7, insbesondere dessen Außenseite 15, in Richtung des mit der Absaugschnittstelle 1 verbundenen Saugreinigungsgerätes 21 führt und das Dichtelement 7 dabei mit größerer Kraft gegen den zweiten Strömungskanal 3 des Saugreinigungsgerätes 21 bzw. einen anderen korrespondierenden Teil des Saugreinigungsgerätes 21 drückt, der die Schnittstelle des Saugreinigungsgerätes 21 darstellt. Das Dichtelement 7 ist des Weiteren so geformt, dass es bei anliegendem Unterdruck nicht zu einer Verringerung des kleinsten Öffnungsquerschnitts (bezogen auf einen Zustand ohne Unterdruck) der Absaugschnittstelle 1 kommt. Vielmehr ist das Dichtelement 7 so geformt, dass sich das Dichtelement 7 vorrangig in Richtung des Saugreinigungsgerätes 21 streckt. Im Einzelnen kommt es hier beispielsweise unter Berücksichtigung der dem weichelastischen Material des Dichtelementes 7 innewohnenden Flexibilität bei anliegendem Unterdruck zu einer geringfügigen Verringerung des Öffnungsquerschnittes in der Öffnungsebene 6, während es im Bereich eines Kontaktes zwischen dem Dichtelement 7 und dem Strömungskanal 3 zu einer minimalen Aufweitung des Öffnungsquerschnitts kommt. In einem Übergangsbereich zwischen den Schenkelendbereichen 11 und den Verbindungsstellen 13, 14 des Grundkörpers 4 kommt es bei Anlegen eines Unterdrucks innerhalb der Absaugschnittstelle 1 nicht zu einer wesentlichen Veränderung des Öffnungsquerschnitts. Im Sinne der Erfindung ist es dabei von Bedeutung, dass das Dichtelement 7 als Ganzes bei Beaufschlagung mit Unterdruck nicht über einen kleinsten Öffnungsquerschnitt (bezogen auf einen Zustand ohne Beaufschlagung mit Unterdruck) hinaus verringert wird. Dazu sind die gegenüber den Schenkeln 9, 10 längeren Schenkelendbereiche 11, 12 an den Verbindungsstellen 13, 14 des Grundkörpers 4 der Absaugschnittstelle 1 befestigt. Die verglichen mit den Schenkelendbereichen 11, 12 kürzeren Schenkel 9, 10 des Dichtelementes 7 sind aufgrund deren geringerer Länge mechanisch stabil und nicht separat fixiert. Die Schenkel 9, 10 sind so stabil, dass sie durch den anliegenden Unterdruck nicht weiter nach innen, d. h. in die Absaugöffnung 5 hinein, gezogen werden als dies über eine vollkommen gestreckte Stellung der Außenseite 15 hinausgeht, bei welcher die Winkel α, β einen Winkel von 90 Grad zu der Öffnungsebene 6 der Absaugöffnung 5 aufweisen. Vielmehr ist der Betrag der Winkel α, β auch bei gestreckter Endstellung der Biegestelle 8 vorteilhaft kleiner als 90 Grad, insbesondere kleiner als 85 Grad. Damit wird sichergestellt, dass es nicht zu einem "Umklappen" der Außenseite 15, d. h. zu einer konvexen Form der Außenseite 15, kommt.

In der entspannten, d. h. nicht mit Unterdruck beaufschlagten Stellung des Dichtelementes 7 weisen die Schenkel 9, 10 Winkel α, β von ungefähr 50 Grad bis 65 Grad zu der Öffnungsebene 6 der Absaugöffnung 5 auf. Dadurch wird erreicht, dass der Unterdruck die Schenkel 9, 10 nach innen zieht, so dass sich das Dichtelement 7 tendenziell aufrichtet und sich dadurch das Höhenmaß der Dichtung orthogonal zu der Öffnungseben 6 vergrößert. Dadurch kommt es zu einer Erhöhung der Anpresskraft gegen das mit der Absaugschnittstelle 1 verbundene Saugreinigungsgerät 21. Der in der Absaugschnittstelle 1 anliegende Unterdruck bewirkt eine Zugkraft auf die Außenseite 15 des Dichtelementes 7. Da der zu dem Saugreinigungsgerät 21 gewandte Schenkelendbereich 12 des Dichtelementes 7 beweglich mit der Verbindungsstelle 14 der Absaugschnittstelle 1 verbunden ist, kann sich eine resultierende Kraft um die so gebildete Drehachse ausbilden, welche zu einem Aufstellen des Dichtelementes 7 führt. Dadurch wird die beschriebene Erhöhung des Anpressdrucks des Dichtelementes 7 gegen die korrespondierende Fläche des Saugreinigungsgerätes 21 erreicht. Damit ist ein optimal verlustfreier Übergang des Sauggutes von der Staubkammer 23 des Saugreinigungsgerätes 21 in die Basisstaubkammer 27 der Basisstation 20 möglich.

### Liste der Bezugszeichen

| | | | |
|---|---|---|---|
| 1 | Absaugschnittstelle | 25 | Basisplatte |
| 2 | Erster Strömungskanal | 26 | Oberseite |
| 3 | Zweiter Strömungskanal | 27 | Basisstaubkammer |
| 4 | Grundkörper | 28 | Öffnung |
| 5 | Absaugöffnung | | |
| 6 | Öffnungsebene | α | Winkel |
| 7 | Dichtelement | β | Winkel |
| 8 | Biegestelle | | |
| 9 | Schenkel | | |
| 10 | Schenkel | | |
| 11 | Schenkelendbereich | | |
| 12 | Schenkelendbereich | | |
| 13 | Verbindungsstelle | | |
| 14 | Verbindungsstelle | | |
| 15 | Außenseite | | |
| 16 | Rad | | |
| 17 | Reinigungselement | | |
| 18 | Steckelement | | |
| 19 | Stecköffnung | | |
| 20 | Basisstation | | |
| 21 | Saugreinigungsgerät | | |
| 22 | Basisgehäuse | | |
| 23 | Staubkammer | | |
| 24 | Gebläse | | |

## Patentansprüche

1. Absaugschnittstelle (1) zur luftdichten Verbindung eines ersten Strömungskanals (2) mit einem zweiten Strömungskanal (3), wobei die Absaugschnittstelle (1) einen Grundkörper (4) mit einer Absaugöffnung (5) aufweist, wobei die Absaugöffnung (5) eine Öffnungsebene (6) und ein die Absaugöffnung (5) in Umfangsrichtung umgebendes Dichtelement (7) aufweist, **dadurch gekennzeichnet, dass** das Dichtelement (7) als elastischer Faltenbalg ausgebildet ist, welcher in einem orthogonal zu der Öffnungsebene (6) orientierten Querschnitt betrachtet in einem entspannten Zustand des Dichtelementes (7) eine E-Form mit zumindest einer Biegestelle (8), zwei sich in der Biegestelle (8) treffenden Schenkeln (9, 10) und zwei sich an die Schenkel (9, 10) anschließenden Schenkelendbereichen (11, 12) aufweist, wobei die Schenkelendbereiche (11, 12) in einer von der Absaugöffnung (5) abgewandten Richtung nach radial außen weisen und mit zwei örtlich getrennten Verbindungsstellen (13, 14) des Grundkörpers (4) verbunden sind.

2. Absaugschnittstelle (1) nach Anspruch 1, **dadurch gekennzeichnet, dass** das Dichtelement (7) ausgebildet ist, sich bei einem in der Öffnungsebene (6) ausbildenden Unterdruck im Bereich der Biegestelle (8) zu strecken, so dass sich der Biegeradius der Biegestelle (8) vergrößert.

3. Absaugschnittstelle (1) nach Anspruch 1 oder 2, **dadurch gekennzeichnet, dass** die, die Absaugöffnung (5) begrenzenden Außenseiten (15) der sich in der Biegestelle (8) treffenden Schenkel (9, 10) in einem entspannten Zustand des Dichtelementes (7) einen Winkel (α, β) von 50 Grad bis 65 Grad zu der Öffnungsebene (6) der Absaugöffnung (5) aufweisen.

4. Absaugschnittstelle (1) nach einem der vorhergehenden Ansprüche, **dadurch gekennzeichnet, dass** die Schenkelendbereiche (11, 12) eine größere Länge aufweisen als der jeweils angrenzende Schenkel (9, 10).

5. Absaugschnittstelle (1) nach einem der vorhergehenden Ansprüche, **dadurch gekennzeichnet, dass**, bezogen auf den orthogonal zu der Öffnungsebene (6) orientierten Querschnitt, ein erster Schenkelendbereich (11) des Dichtelementes (7) flächig mit einer Verbindungsstelle (13) des Grundkörpers (4) verbunden ist, und dass ein zweiter Schenkelendbereich (12) des Dichtelementes (7) relativ zu dem Grundkörper (4) beweglich an einer Verbindungsstelle (14) des Grundkörpers (4) fixiert ist, wobei der zweite Schenkelendbereich (12) insbesondere relativ zu der Verbindungsstelle (14) schwenkbar ist.

6. Absaugschnittstelle (1) nach Anspruch 5, **dadurch gekennzeichnet, dass** der erste Schenkelendbereich (11) mit der Verbindungsstelle (13) des Grundkörpers (4) verklebt, verschweißt oder verrastet ist, und/oder dass die Verbindungsstelle (13) des Grundkörpers (4) Steckelemente (18) aufweist, die in korrespondierende Stecköffnungen (19) des ersten Schenkelendbereiches (11) gesteckt sind.

7. Absaugschnittstelle (1) nach einem der vorhergehenden Ansprüche, **dadurch gekennzeichnet, dass** das Dichtelement (7) aus einem thermoplastischen Elastomer ausgebildet ist, wobei das Dichtelement (7) insbesondere eine Materialhärte von 30 Shore A bis 60 Shore A aufweist.

8. Basisstation (20) zum Aussaugen einer Staubkammer (23) eines Saugreinigungsgerätes (21), wobei die Basisstation (20) ein Basisgehäuse (22) mit einem in dem Basisgehäuse (22) angeordneten Gebläse (24), einem ersten Strömungskanal (2) und einer Absaugschnittstelle (1) zum strömungsführenden Verbinden des Gebläses (24) mit einem zweiten Strömungskanal (3) des Saugreinigungsgerätes (21) aufweist, **dadurch gekennzeichnet, dass** die Absaugschnittstelle (1) nach einem der vorhergehenden Ansprüche ausgebildet ist.

9. Basisstation (20) nach Anspruch 8, **gekennzeichnet durch** eine Basisplatte (25) zur zumindest teilweisen Aufnahme des Saugreinigungsgerätes (21), wobei die Absaugschnittstelle (1) der Basisstation (20), bezogen auf eine Orientierung der Basisstation (20) während eines Saugbetriebs, auf einer nach oben gerichteten Oberseite (26) der Basisplatte (25) angeordnet ist, so dass eine Flächennormale einer Öffnungsebene (6) der Absaugschnittstelle (1) im Wesentlichen vertikal orientiert ist.

10. System aus einem Saugreinigungsgerät (21) und einer nach einem der Ansprüche 8 oder 9 ausgebildeten Basisstation (20), wobei die Basisstation (20) den ersten Strömungskanal (2) und die Absaugschnittstelle (1) aufweist, wobei das Saugreinigungsgerät (21) den zweiten Strömungskanal (3) aufweist und wobei die Absaugschnittstelle (1) eingerichtet ist, den ersten Strömungskanal (2) luftdicht mit dem zweiten Strömungskanal (3) zu verbinden, wenn das Saugreinigungsgerät (21) mit der Basisstation (20) verbunden ist, wobei das Dichtelement (7) der Absaugschnittstelle (1) so ausgebildet ist, dass das Dichtelement (7) bei Betrieb des Gebläses (24) der Basisstation (20) aufgrund eines im Bereich der Absaugschnittstelle (1) wirkenden Unterdrucks unter Vergrößerung des Biegeradius der Biegestelle (8) des Dichtelementes (7) in Richtung des Saugreinigungsgerätes (21) gestreckt wird.

## Claims

1. An extraction interface (1) for connecting a first flow channel (2) to a second flow channel (3) in an airtight manner, wherein the extraction interface (1) has a main body (4) with an extraction opening (5), wherein the extraction opening (5) has an opening plane (6) and a sealing element (7) that surrounds the extraction opening (5) in the circumferential direction, **characterized in that** the sealing element (7) is realized in the form of an elastic bellows, which viewed in a cross section oriented orthogonal to the opening plane (6) has in a relaxed state of the sealing element (7) an E-shape with at least one bending point (8), two legs (9, 10) that meet in the bending point (8) and two leg end regions (11, 12) adjoining the legs (9, 10), and wherein the leg end regions (11, 12) point radially outward in a direction facing away from the extraction opening (5) and are connected to two locally separated connecting points (13, 14) of the main body (4).

2. The extraction interface (1) according to claim 1, **characterized in that** the sealing element (7) is designed for expanding in the region of the bending point (8) when a vacuum is generated in the opening plane (6) such that the bending radius of the bending point (8) is enlarged.

3. The extraction interface (1) according to claim 1 or 2, **characterized in that** the outer sides (15) of the legs (9, 10) meeting in the bending point (8) delimit the extraction opening (5) and extend at an angle (α, β) of 50 degrees to 65 degrees relative to the opening plane (6) of the extraction opening (5) in a relaxed state of the sealing element (7).

4. The extraction interface (1) according to one of the preceding claims, **characterized in that** the leg end regions (11, 12) have a greater length than the respectively adjoining leg (9, 10).

5. The extraction interface (1) according to one of the preceding claims, **characterized in that** a first leg end region (11) of the sealing element (7) is with respect to the cross section oriented orthogonal to the opening plane (6) connected to a connecting point (13) of the main body (4) in a laminar manner, and that a second leg end region (12) of the sealing element (7) is fixed on a connecting point (14) of the main body (4) so as to be movable relative to the main body (4), and wherein the second leg end region (12) particularly is pivotable relative to the connecting point (14).

6. The extraction interface (1) according to claim 5, **characterized in that** the first leg end region (11) is bonded, welded or snap-locked to the connecting point (13) of the main body (4) and/or that the connecting point (13) of the main body (4) has plug elements (18) that are inserted into corresponding plug receptacles (19) of the first leg end region (11).

7. The extraction interface (1) according to one of the preceding claims, **characterized in that** the sealing element (7) is made of a thermoplastic elastomer, and wherein the sealing element (7) particularly has a material hardness of 30 Shore A to 60 Shore A.

8. A base station (20) for evacuating a dust chamber (23) of a vacuum cleaning appliance (21), wherein the base station (20) has a base housing (22) with a fan (24) arranged in the base housing (22), a first flow channel (2) and an extraction interface (1) for connecting the fan (24) to a second flow channel (3) of the vacuum cleaning appliance (21) in a flow-conducting manner, **characterized in that** the extraction interface (1) is realized in accordance with one of the preceding claims.

9. The base station (20) according to claim 8, **characterized by** a base plate (25) for at least partially accommodating the vacuum cleaning appliance (21), wherein the extraction interface (1) of the base station (20) is with respect to an orientation of the base station (20) during a vacuuming mode arranged on an upwardly directed surface (26) of the base plate (25) such that a surface normal of an opening plane (6) of the extraction interface (1) essentially is oriented vertically.

10. A system consisting of a vacuum cleaning appliance (21) and a base station (20) realized in accordance with one of the claims 8 or 9, wherein the base station (20) has the first flow channel (2) and the extraction interface (1), wherein the vacuum cleaning appliance (21) has the second flow channel (3), wherein the extraction interface (1) is designed for connecting the first flow channel (2) to the second flow channel (3) in an airtight manner when the vacuum cleaning appliance (21) is connected to the base station (20), and wherein the sealing element (7) of the extraction interface (1) is designed in such a way that the sealing element (7) is during the operation of the fan (24) of the base station (20) expanded in the direction of the vacuum cleaning appliance (21) by enlarging the bending radius of the bending point (8) of the sealing element (7) due to a vacuum acting in the region of the extraction interface (1).

## Revendications

1. Interface d'aspiration (1) pour la liaison étanche à l'air d'un premier canal d'écoulement (2) avec un deuxième canal d'écoulement (3), l'interface d'aspiration (1) présentant un corps de base (4) avec une ouverture d'aspiration (5), l'ouverture d'aspiration (5) présentant un plan d'ouverture (6) et un élément d'étanchéité (7) entourant l'ouverture d'aspiration (5) dans la direction périphérique, **caractérisée en ce que** l'élément d'étanchéité (7) est conçu comme un soufflet élastique, qui, vu dans une section transversale orientée orthogonalement au plan de l'ouverture (6), a, dans un état détendu de l'élément d'étanchéité (7), une forme en E avec au moins un point de flexion (8), deux branches (9, 10) se rencontrant dans le point de flexion (8) et deux branches (9, 10) se raccordant aux branches (9, 10), les zones d'extrémité des branches (11, 12) étant orientées radialement vers l'extérieur dans une direction opposée à l'ouverture d'aspiration (5) et étant reliées à deux points de liaison (13, 14) localement séparés du corps de base (4).

2. Interface d'aspiration (1) selon la revendication 1, **caractérisée en ce que** l'élément d'étanchéité (7) est conçu pour s'étirer dans la zone du point de flexion (8) en cas de dépression se formant dans le plan d'ouverture (6), de sorte que le rayon de courbure du point de flexion (8) s'agrandit.

3. Interface d'aspiration (1) selon la revendication 1 ou 2, **caractérisée en ce que** les côtés extérieurs (15), délimitant l'ouverture d'aspiration (5), des branches (9, 10) se rencontrant dans le point de flexion (8) présentent, dans un état détendu de l'élément d'étanchéité (7), un angle (α, β) de 50 degrés à 65 degrés par rapport au plan d'ouverture (6) de l'ouverture d'aspiration (5).

4. Interface d'aspiration (1) selon l'une des revendications précédentes, **caractérisée en ce que** les zones d'extrémité des branches (11, 12) présentent une longueur supérieure à celle de la branche (9, 10) respectivement adjacente.

5. Interface d'aspiration (1) selon l'une des revendications précédentes, **caractérisée en ce que**, par rapport à la section transversale orientée orthogonalement au plan d'ouverture (6), une première zone d'extrémité de branche (11) de l'élément d'étanchéité (7) est reliée à plat à un point de liaison (13) du corps de base (4), et **en ce qu'**une deuxième zone d'extrémité de branche (12) de l'élément d'étanchéité (7) est fixée de manière mobile par rapport au corps de base (4) à un point de liaison (14) du corps de base (4), la deuxième zone d'extrémité de branche (12) pouvant notamment pivoter par rapport au point de liaison (14).

6. Interface d'aspiration (1) selon la revendication 5, **caractérisée en ce que** la première zone d'extrémité de branche (11) est collée, soudée ou enclenchée avec le point de liaison (13) du corps de base (4), et/ou **en ce que** le point de liaison (13) du corps de base (4) présente des éléments enfichables (18) qui sont enfichés dans des ouvertures d'enfichage (19) correspondantes de la première zone d'extrémité de branche (11).

7. Interface d'aspiration (1) selon l'une des revendications précédentes, **caractérisée en ce que** l'élément d'étanchéité (7) est réalisé en un élastomère thermoplastique, l'élément d'étanchéité (7) présentant notamment une dureté de matériau de 30 Shore A à 60 Shore A.

8. Station de base (20) pour aspirer une chambre à poussière (23) d'un appareil de nettoyage par aspiration (21), la station de base (20) présentant un boîtier de base (22) avec une soufflante (24) disposée dans le boîtier de base (22), un premier canal d'écoulement (2) et une interface d'aspiration (1) pour relier la soufflante (24) à un deuxième canal d'écoulement (3) de l'appareil de nettoyage par aspiration (21) en guidant l'écoulement, **caractérisée en ce que** l'interface d'aspiration (1) est réalisée selon l'une des revendications précédentes.

9. Station de base (20) selon la revendication 8, **caractérisée par** une plaque de base (25) destinée à recevoir au moins partiellement l'appareil de nettoyage par aspiration (21), l'interface d'aspiration (1) de la station de base (20) étant disposée, par rapport à une orientation de la station de base (20) pendant un mode d'aspiration, sur une face supérieure (26) orientée vers le haut de la plaque de base (25), de sorte qu'une normale à une surface d'un plan d'ouverture (6) de l'interface d'aspiration (1) est orientée essentiellement verticalement.

10. Système constitué d'un appareil de nettoyage par aspiration (21) et d'une station de base (20) réalisée selon l'une des revendications 8 ou 9, la station de base (20) présentant le premier canal d'écoulement (2) et l'interface d'aspiration (1), l'appareil de nettoyage par aspiration (21) présentant le deuxième canal d'écoulement (3) et l'interface d'aspiration (1) étant agencée pour relier de manière étanche à l'air le premier canal d'écoulement (2) avec le deuxième canal d'écoulement (3), lorsque l'appareil de nettoyage par aspiration (21) est relié à la station de base (20), l'élément d'étanchéité (7) de l'interface d'aspiration (1) étant conçu de telle sorte que, lorsque le ventilateur (24) de la station de base (20) fonctionne, l'élément d'étanchéité (7) est étiré en direction de l'appareil de nettoyage par aspiration (21) en raison d'une dépression agissant dans la zone de l'interface d'aspiration (1) en augmentant le rayon de courbure du point de flexion (8) de l'élément d'étanchéité (7).
